# EUROPÄISCHE PATENTSCHRIFT

(11) **EP 2 422 952 B1**
(45) Veröffentlichungstag und Bekanntmachung des Hinweises auf die Patenterteilung: **21.03.2018**
(21) Anmeldenummer: 11179098.6
(22) Anmeldetag: 26.08.2011
(51) Int. Cl.: B29C 45/16, B29C 45/00, B29C 45/06, B60Q 3/00

(54) **Method and mould for moulding a cover as well as cover**
Verfahren und Werkzeug zur Herstellung einer Abdeckung sowie Abdeckung
Méthode et moule pour le moulage d'un couvercle et couvercle

(30) Priorität: 27.08.2010 DE 102010035632
(43) Veröffentlichungstag der Anmeldung: 29.02.2012
(73) Patentinhaber: Ditter Plastic GmbH + Co. KG, 77716 Haslach i.K. (DE)
(72) Erfinder: Ditter, Rolf Peter, 77716 Haslach i.K. (DE)
(74) Vertreter: Weickmann & Weickmann PartmbB

(56) Entgegenhaltungen:
- EP-A1- 0 590 170
- DE-A1- 3 145 264
- DE-A1- 10 226 892
- US-A- 4 155 972

## Beschreibung

### I. Anwendungsgebiet

Die Erfindung betrifft Abdeckungen aus Kunststoff, wie sie als Teile von Armaturentafeln in Kraftfahrzeugen, in Bedienfeldern von Maschinensteuerungen und für vielfältige andere Zwecke in der Industrie in großer Anzahl benötigt werden. Eine Abdeckung kann dabei eine fest montierte Blende ebenso sein wie eine bewegliches Bedienelement, beispielsweise eine Druck-Taste, ein Dreh-Regler oder Dreh-Schalter oder jedes andere Element, welches dahinter liegende Bauteile abdecken soll.

### II. Technischer Hintergrund

Solche Abdeckungen müssen besonders in der Automobilindustrie zur Verwendung in Armaturentafeln qualitativ hochwertig, also nicht nur maßhaltig, sondern auch von der Oberflächenstruktur und den Bedruckungsrändern etc. sehr hochqualitativ hergestellt werden.

Derartige Abdeckungen bestehen in aller Regel nicht nur aus einer die eigentliche Abdeckfunktion bietenden Frontplatte, sondern auch aus einem sich von der Rückseite der Frontplatte aus in die Tiefenrichtung weg erstreckenden Grundkörper, so dass Frontplatte und Grundkörper gemeinsam eine dreidimensionale Abdeckung ergeben, die ausreichend eigenstabil ist, gut gehandhabt und montiert werden kann und in der darüber hinaus weitere Zusatzfunktionen untergebracht werden können.

Die Frontplatte besteht zu diesem Zweck meist aus durchsichtigem Material, und ist mit einer lichtundurchlässigen Schicht auf ihrer Forderseite bedeckt, die nur dort durchbrochen ist, wo ein lichtdurchlässiger, insbesondere hinterleuchteter Bereich in der Abdeckung erzielt werden soll. Zu diesem Zweck wird die lichtundurchlässige Schicht zunächst flächig deckend auf der Frontplatte aufgebracht und in den gewünschten Bereichen anschließend z. B. mittels Laserbeschuss wieder entfernt.

Eine solche Zusatzfunktion ist beispielsweise die Ausbildung von in der Tiefenrichtung der Abdeckung, insbesondere des Grundkörpers der Abdeckung, verlaufende Durchgangsöffnungen, die auf der Frontseite von der Frontplatte verschlossen oder auch offen gelassen werden können.

Die frontseitig offenen Durchlässe dienen beispielsweise zum Einsetzen von Schaltern, Bedienknöpfen (die selbst wieder eine Abdeckung im Sinne dieser Erfindung sein können) oder Ähnlichem von der Frontseite der Abdeckung her, während die auf der Frontseite durch die Frontplatte verschlossenen Sacklochkanäle andere Funktionen haben, und häufig nicht nur der Stabilisierung des Grundkörpers dienen:
So sind beispielsweise Bereiche der Abdeckung, etwa einzelne Sacklöcher, von der Rückseite der Abdeckung her hinterleuchtet mit Hilfe von z. B. Leuchtdioden, die auf einer hinter der Abdeckung platzierten Platine in entsprechender Position angeordnet werden.

Gerade wenn der zu beleuchtende Bereich in der Frontplatte der Abdeckung relativ klein ist, und sich wegen der Erstreckung in die Tiefe der Abdeckung die beleuchtende Leuchtdiode relativ weit hinter der Frontplatte befindet, beispielsweise ein bis zwei Zentimeter oder mehr, ist die Beleuchtungswirkung auf der Frontplatte zu gering.

Zu diesem Zweck ist es bekannt, in dem Sackloch der Abdeckung einen meist stiftförmigen Lichtleiter aus Kunststoff anzuordnen, der die Distanz zwischen der beleuchtenden Leuchtdiode und der in diesem Bereich lichtdurchlässigen Frontplatte überbrückt, um eine größere Lichtmenge an der Frontplatte ankommen zu lassen. Die Lichtleiter-Stifte bestehen dabei aus einem meist glasklaren, lichtdurchlässigen Kunststoff, und der Lichtleitereffekt besteht hauptsächlich darin, dass an den in Verlaufsrichtung des Lichtleiter-Stiftes verlaufenden Seitenflächen des Lichtleiter-Stiftes Reflektion des dort auftreffenden Lichtes stattfindet und dieses zurück in den Lichtleiter geworfen wird.

In diesem Zusammenhang ist es bereits bekannt, dass die Lichtleiterfunktion der Lichtleiter-Stifte geringer ist, wenn die Lichtleiter-Stifte durch einfaches Füllen des Sacklochkanals mit durchsichtigem Kunststoff im Spritzverfahren hergestellt werden, also die Lichtleiter-Stifte auf ihren gesamten Seitenflächen mit den umgebenden Wandungen des Sackloches, also des Grundkörpers der Abdeckung, verschmolzen sind.

Eine Verschmelzung der stirnseitigen Frontfläche und/oder des vorderen Bereiches der Seitenflächen des Lichtleiter-Stiftes mit insbesondere der Rückseite der Frontplatte ist dagegen im Wesentlichen unschädlich, da dort ein Durchtritt der Lichtstrahlung gerade erwünscht ist.

Aus diesem Grunde ist es bekannt, die Abdeckung einerseits und die Lichtleiter-Stifte andererseits getrennt, insbesondere beide im Spritzgussverfahren aus Kunststoff, herzustellen und anschließend die Lichtleiter-Stifte von hinten in die hinten offenen Sacklöcher einzuschieben, wo sie in der Regel durch Kraftschluss oder entsprechende formschlüssige Gestaltung von Lichtleiter-Stift und Sackloch gegeneinander verrastet werden.

Dies bedeutet jedoch einen hohen logistischen sowie Montageaufwand, da Abdeckung und Lichtleiter-Stifte zunächst getrennt, wenn auch ggf. im gleichen Spritzgusswerkzeug, hergestellt werden müssen, anschließend die Lichtleiter-Stifte aus der Spritzform entnommen, zwischengelagert, zum Montage-Ort verbracht, dort in richtiger Zuordnung zu den Sacklochkanälen gebracht und in die Sacklochkanäle eingesetzt werden müssen. Egal ob dies manuell oder automatisch geschieht ist der Aufwand sehr hoch, auch bei automatischer Montage ist vor allem der Investitionsaufwand für Entnahmevorrichtungen, Montagevorrichtungen, Transportvorrichtungen, Lagerungsmittel etc. vor allem für die bis zum 20 Lichtleiter-Stifte pro Abdeckung sehr hoch.

Ein weiteres Problem in diesem Zusammenhang besteht darin, dass solche Abdeckungen hinsichtlich der Form der Vorderseite der Frontplatte häufig nicht eben sind, sondern eine Wölbung aufweisen, die nicht nur in einer, sondern in zwei Raumrichtungen gegeben sein kann, wie dies häufig bei Abdeckungen für die Armaturentafeln von Kraftfahrzeugen der Fall ist.

Da aus spritztechnischen Gründen diese Wölbung der Vorderseite der Frontplatte meist auch auf der Rückseite der Frontplatte vorhanden ist, um eine gleichmäßige Wandstärke der Frontplatte zu erreichen, und die Lichtleiter-Stifte möglichst exakt mit ihrer Stirnfläche an der Rückseite der Frontplatte anliegen sollen, bedeutet dies, dass in einer solchen Abdeckung einzusetzende Lichtleiterstifte, welches 10, 20 oder auch mehr sein können, nicht untereinander gleich sind, sondern hinsichtlich Länge, Wölbung der Stirnfläche, Positionierung der Rastelemente in ihrem Längsverlauf usw. jeweils geringfügig unterschiedlich sind.

Dies bedeutet, dass die Lichtleiter-Stifte bezüglich der einzelnen Sacklochkanäle nicht untereinander austauschbar sind und wegen der geringen Abmessungen der Lichtleiter-Stifte, also etwa einer Länge von ein bis zwei Zentimetern und einer Querschnittserstreckung von wenigen Millimetern, sind die vorhandenen Unterschiede zwischen den verschiedenen Lichtleitern so gering, dass sie mit bloßem Auge häufig nicht erkannt werden können. Dies führt bei der anschließenden Montage der Lichtleiter-Stifte in den entsprechenden Sachlochkanälen der Abdeckung häufig zu Verwechslungen, wenn die Lichtleiter-Stifte nicht von Anfang an nach ihrer Art getrennt werden und selbst dann kommt es noch zu Verwechslungen.

Wenn jedoch in einen Sacklochkanal bei der Montage ein falscher Lichtleiter-stift eingepresst wird, wird dies zusätzlich bei der Montage häufig nicht bemerkt, da eben die körperlichen Unterschiede zwischen den verschiedenen Lichtleitern sehr gering sind.

Dieser Fehler stellt sich meist erst später heraus, entweder weil eine anschließende Montage der mit Lichtleitern bestückten Abdeckung in einem umgebenden Bauteil nicht möglich ist oder dort zu einer Beschädigung entweder an der Abdeckung oder an dem falsch eingesetzten Lichtleiter oder an dem die Abdeckung umgebenden, aufnehmenden Bauteil führen.

Für den Zulieferanten der Abdeckung zu einer größeren Baugruppe ergibt dies jedoch große Schwierigkeiten, wenn er Ausschuss aufgrund falsch eingesetzter Lichtleiter-Stifte nicht erkennt und ein solches fehlerhaftes Bauteil an seinen Abnehmer liefert. Ein Verfahren zur Herstellung einer Abdeckung ist beispielsweise aus der EP 0 590 170 A1 bekannt. Die US 4 155 972 A offenbart eine durchleuchtete Abdeckung.

### III. Darstellung der Erfindung

### a) Technische Aufgabe

Es ist daher die Aufgabe gemäß der Erfindung, ein Verfahren zum Herstellen von Abdeckungen mit nachträglich darin eingesetzten Lichtleiter-Stiften zur Verfügung zu stellen, welches den Herstellungsaufwand verringert, und ebenso ein hierfür geeignetes Werkzeug und eine hierfür geeignete Abdeckung zur Verfügung zu stellen.

### b) Lösung der Aufgabe

Diese Aufgabe wird durch die Merkmale der Ansprüche 1, 11 und 12 gelöst. Vorteilhafte Ausführungsformen ergeben sich aus den Unteransprüchen.

Die zugrunde liegende Aufgabe wird dadurch gelöst, dass der Grundkörper einerseits und die Lichtleiterstifte andererseits getrennt durch Spritzen hergestellt werden, allerdings im gleichen Formwerkzeug, und anschließend die Lichtleiterstifte mittels des Werkzeuges oder beweglicher Teile davon in die Stiftkanäle des noch in der Form befindlichen Grundkörpers eingeschoben wird.

Der Grundkörper erstreckt sich dabei von der - vor oder nach dem Einschieben der Lichtleiterstifte in den Grundkörper angespritzten - Frontplatte, die die Abdeckfunktion der Abdeckung gewährleistet, in Tiefenrichtung nach hinten und bewirkt einerseits eine ausreichende Stabilität der Abdeckung aufgrund stärkerer Dreidimensionalität und stellt die benötigten, in Tiefenrichtung verlaufenden, Zwischenwände zwischen einzelnen Hohlräumen der Abdeckung zur Verfügung, die beispielsweise in der späteren Anwendung separat von hinten beleuchtet werden sollen, ohne dass Licht in benachbarte Hohlräume der Abdeckung hinübergelangen kann.

Falls die Frontplatte erst nach dem Einschieben der Lichtleiterstifte an dem Grundkörper angespritzt wird, stehen die Lichtleiterstifte mit ihrer Frontseite soweit vor bis zur Frontfläche des Grundkörpers, insbesondere darüber hinaus etwas vor, dass die Frontplatte auch an den Frontflächen der Lichtleiterstifte mit angespritzt wird, was den optimalen Lichtübergang in Verlaufsrichtung der Lichtleiterstifte in die Frontplatte hinein bewirkt.

Denn üblicherweise besteht die Frontplatte aus einem durchsichtigen Material, und wird erst nach fertiger Herstellung der Abdeckung auf ihrer Vorderseite mit einer lichtundurchlässigen Schicht bedeckt z. B. mittels eines Druck- oder Lackierverfahrens.

Die Bereiche, in denen Licht aus den Lichtleitern auf der Frontfläche der Frontplatte später erkennbar sein soll, wird diese lichtundurchlässige Schicht anschließend wieder maßlich exakt entfernt, beispielsweise mittels Lasern.

Die Frontplatte kann jedoch auch insgesamt aus lichtundurchlässigem Material bestehen, dann jedoch müssen die Lichtleiter-Stifte aus durchsichtigem Material diese Frontplatte vollständig durchdringen und in deren Frontfläche enden, um dort beleuchtete Bereiche zu erzeugen.

Im Gegensatz zur Frontplatte besteht dagegen der Grundkörper immer aus lichtundurchlässigem Material, vor allem um die Funktion der Abschottung von Fremdlicht von einem in einen anderen Hohlraum des Grundkörpers zu erfüllen.

Um die Lichtleitung in Längsrichtung der Lichtleiterstifte zu optimieren, besteht der Grundkörper aus einem hellen vorzugsweise weißen Kunststoff, zumindest an den Innenflächen der Stiftkanäle.

Falls die Frontplatte bereits vor dem Einschieben der Lichtleiterstifte in den Grundkörper gespritzt und damit am Grundkörper angespritzt wurde, wobei in diesem Fall vorzugsweise Lichtleiterstifte und Frontplatte aus dem gleichen durchsichtigen Material gespritzt werden, liegt die vordere Stirnfläche der anschließend eingesetzten Lichtleiterstifte lediglich an der Rückseite der Frontplatte an oder befindet sich dieser gegenüber sogar in einem geringen Abstand, was einen leicht verringerten Lichtübergang bewirkt.

Die drei Schritte des Spritzens des Grundkörpers, Einschieben der Lichtleiter-stifte in den Grundkörper sowie Spritzen der Frontplatte werden im gleichen

Arbeitsschritt und dabei insbesondere in drei verschiedenen Sektionen des Werkzeuges durchgeführt, wobei das Spritzen der Lichtleiterstifte vorzugsweise in der gleichen Sektion wie das Spritzen des Grundkörpers erfolgt.

Um die mehreren Sektionen nacheinander zum Einsatz zu bringen, ist eine der Werkzeughälften, vorzugsweise das Auswerferwerkzeug, als Drehteller ausgebildet und gesteuert um seine Mitte, die Axialrichtung, drehbar.

Für den Fall des Einschiebens der Lichtleiterstifte als letzten Schritt bedeutet dies, dass
- in der ersten Sektion z. B. die Frontplatte gespritzt wird,
- nach Weiterdrehen der drehbaren Werkzeughälfte in der zweiten Sektion der feststehenden Werkzeughälfte an dieser Frontplatte der Grundkörper angespritzt wird und abseits hiervon im gleichen Spritzschritt auch die Lichtleiterstifte gespritzt werden und
- in der dritten Sektion der feststehenden Werkzeughälfte die Lichtleiterstifte in fluchtende Lage zum Grundkörper gebracht und in den Grundkörper eingeschoben werden.

Die Vorgänge in den drei Sektionen laufen selbstverständlich zeitlich parallel zueinander, allerdings für verschiedene Abdeckungen, ab, so dass also bei diesem Beispiel in der ersten Sektion die Frontplatte gespritzt wird und gleichzeitig in der zweiten Sektion ein Grundkörper an eine andere Frontplatte angespritzt wird, während in der dritten Sektion zeitgleich die Lichtleiterstifte in wiederum einem anderen Grundkörper montiert werden.

Der Bewegungsablauf kann sehr unterschiedlich sein, um dies mit einem Spritzwerkzeug, welches in der Regel aus einem Auswerferwerkzeug und einem Düsenwerkzeug zusammengesetzt ist, zu realisieren.

Eine Lösung besteht darin, dass Grundkörper und Lichtleiterstifte im Werkzeug zwar getrennt voneinander hergestellt werden, sich nach dem Spritzen jedoch bereits in der richtigen fluchtenden Position zueinander befinden, so dass anschließend die Lichtleiterstifte von einem Werkzeugschieber lediglich in die hinten offenen Seiten der entsprechenden Kanäle des Grundkörpers eingeschoben werden müssen.

In diesem Fall befindet sich beim Spritzen von Grundkörper und Lichtleiterstiften - welches nacheinander oder auch gleichzeitig geschehen kann - vorzugsweise ein zurückziehbares Sperrelement, welches Bestandteil des Werkzeuges ist, als Trennung zwischen den Kavitäten für Grundkörper und Lichtleiterstiften.
Die andere Lösung besteht darin, dass nach dem Spritzen der Lichtleiterstifte sich diese noch nicht in der richtigen fluchtenden Lage zu den Kanälen im Grundkörper befinden.

Dann muss eines der beiden Produkt-Teile, also Grundkörper oder Lichtleiterstifte, für das Einschieben ineinander erst in die dafür fluchtende richtige Position gebracht werden.

Dies erfolgt durch ein das zu bewegende der beiden Produkt-Teile umgebendes Werkzeugteil, welches - nach Öffnen des Werkzeuges - aus der dann offenen Kontaktseite der jeweiligen Werkzeughälfte herausgefahren und so bewegt (quer verfahren, gedreht, verschwenkt) wird, dass diese fluchtende Lage erreicht ist.

Eine Möglichkeit ist eine sogenannte Indexplatte, die zunächst - beispielsweise alle für eine Abdeckung benötigten Lichtleiterstifte beinhaltend - soweit aus der Frontfläche der sie tragenden Werkzeughälfte herausgefahren wird, dass sie frei um die axiale Richtung drehbar ist und dann um beispielsweise 180° um die axiale Richtung gedreht wird, wobei die Drehachse so gewählt ist, dass sich nach der Drehung die Lichtleiterstifte in fluchtender Position mit den Kanälen der Abdeckung befinden.

Falls die Stiftkanäle als Sacklochkanäle ausgestaltet sind, da die Frontplatte vor dem Einschieben der Lichtleiterstifte bereits an den Grundkörper angespritzt wurde, muss das Einschieben der Lichtleiterstifte zwangsweise von der einzig vorhandenen hinteren Öffnung dieser Stiftkanäle erfolgen.

Falls das Anspritzen der Frontplatte erst nach dem Einschieben der Lichtleiterstifte erfolgt, kann das Einschieben der Lichtleiterstifte auch von der Vorderseite der Frontplatte in die dort dann noch offenen Kanäle erfolgen.

Vorzugsweise werden jedoch Grundkörper einerseits und die einen oder mehreren Lichtleiterstifte andererseits als die beiden zusammenzubringenden Produkt-Teile im Werkzeug so gespritzt, dass nur eines der beiden Produkt-Teile für das Ineinanderschieben bewegt werden muss, während das andere Produkt-Teil, beispielsweise der Grundkörper, in einer der beiden Werkzeughälften nach seinem Spritzen zunächst verbleibt, jedenfalls bis die Lichtleiterstifte darin eingeschoben sind und die Abdeckung fertigt hergestellt ist.

Für diesen Fall bedeutet dies für den Grundkörper, dass diejenige offene Seite der Kanäle, in die anschließend die Lichtleiterstifte eingeschoben werden sollen, nach Öffnen des Werkzeuges vom Zwischenraum zwischen den Werkzeugen bzw. der anderen Werkzeughälfte her frei zugänglich sein muss.

Das verlagerbare Werkzeugteil, beispielsweise die Indexplatte, in der die Lichtleiterstifte nach deren Spritzung zunächst bis zur Montage verbleiben, befindet sich insbesondere in derjenigen Werkzeughälfte, die dem Grundkörper gegenüber liegt. Lediglich die Orientierung der herzustellenden Lichtleiterstifte ist dann unterschiedlich.

Falls die Lichtleiterstifte in den Grundkörper von dessen Rückseite her eingeschoben werden sollen, werden die Lichtleiterstifte
- bei Verbleiben in der gleichen Werkzeughälfte mit in diese Werkzeughälfte hinein weisenden vorderen Stirnflächen gespritzt, oder
- bei Verbleiben in der gegenüberliegender Werkzeughälfte mit aus dieser Werkzeughälfte herausweisenden vorderen Stirnflächen gespritzt.

Das Schieberwerkzeug zum Montieren der Lichtleiterstifte befindet sich meist, aber nicht zwingend, in der den gespritzten, verbliebenen Grundkörpern gegenüberliegenden Werkzeughälfte, unabhängig davon, in welcher der beiden Werkzeughälften die Lichtleiterstifte nach ihrer Herstellung zunächst verblieben sind.

Das Schieberwerkzeug kann ein gegenüber der ihn tragenden Werkzeughälfte bewegliches Schieberwerkzeug sein, welches hydraulisch oder pneumatisch betätigt wird und in axialer Richtung demgegenüber verschiebbar ist, oder es kann sich um gegenüber der Werkzeughälfte unbewegliche Schieberteile handeln, die allein durch das Schließen des Werkzeuges die dann mit ihnen fluchtenden Lichtleiterstiften in die Kanäle des Grundkörpers hinein schieben.

Nach dem Einsetzen der Lichtleiterstifte in den Grundkörper - was vorzugsweise durch das Schließen des Werkzeuges erfolgt - wird gegebenenfalls die Frontplatte an Grundkörper und Lichtleiterstifte angespritzt, sofern dies nicht vor dem Einsetzen der Lichtleiterstifte geschehen ist, und anschließend nach Öffnen des Werkzeuges die fertige Abdeckung aus dem Werkzeug, insbesondere aus dem Auswerferwerkzeug, entnommen.

In der Regel abseits der Spritzgießmaschine wird dann die lichtundurchlässige Schicht auf der Vorderseite der Frontplatte der Abdeckung aufgebracht und in den benötigten Teilbereichen danach wieder mittels Lasern entfernt.

Eine weitere Möglichkeit besteht darin, die nach dem Spritzen noch nicht in fluchtender Lage zu den Kanälen des Grundkörpers befindlichen Lichtleiterstifte durch eine Wendeplatte, die Teil des Werkzeuges ist und sich zwischen Auswerferwerkzeug und Düsenwerkzeug befindet, in diese Position zu bringen, indem diese Wendeplatte - die im Gegensatz zu beispielsweise einer Indexplatte einen Querschnitt besitzt, der genauso groß ist wie der gesamte Querschnitt von Auswerferwerkzeug und Düsenwerkzeug - um eine Querachse zur Axialrichtung um 180° verschwenkbar ist, nachdem Auswerferwerkzeug und Düsenwerkzeug ausreichend weit für diese Schwenkbewegung auseinander gefahren wurden.

Abhängig vom gewählten Fertigungs- und Bewegungsablauf ist die Gestaltung des Spritzwerkzeuges unterschiedlich:
Falls die Lichtleiterstifte bereits in der richtigen fluchtenden Lage zu den Kanälen des Grundkörpers gespritzt werden, ist außer dem beweglichen Sperrelement zum Trennen der Kavitäten für Grundkörper und Lichtleitern und lediglich ein axial beweglich gegenüber einer Werkzeughälfte verschiebbares Schieberwerkzeug notwendig.

Falls die Lichtleiterstifte im Werkzeug dagegen nicht fluchtend zu den Kanälen des Grundkörpers gespritzt werden, ist zusätzlich ein verlagerbares Werkzeugteil, in welchem sich nach dem Spritzen die Lichtleiter oder der Grundkörper befinden, notwendig, beispielsweise eine Indexplatte.

Die Verlagerungsbewegung umfasst in aller Regel einen axialen Abhebevorgang von der Kontaktseite der entsprechenden Werkzeughälfte bis anschließend eine Querverlagerung bezüglich der Axialrichtung oder eine Drehung um eine axial liegende Drehachse möglich ist.

In welcher der beiden Werkzeughälften sich dieses verlagerbare Werkzeugteil befindet, hängt davon ab, welche der beiden Komponenten (Grundkörper oder Lichtleiterstifte) aus derjenigen Werkzeughälfte, in der sie nach dem Spritzen verblieben sind, herausbewegt und zur anderen Komponente hin verlagert werden sollen.

Vorzugsweise sind dies die Lichtleiterstifte und sie verbleiben nach dem Spritzen in der dem Grundkörper gegenüberliegenden Werkzeughälfte, und dort ist dann das verlagerbare Werkzeugteil untergebracht, vorzugsweise im Düsenwerkzeug.

Auf diese Art und Weise wird kein bewegliches Sperrelement benötigt. Im einfachsten Fall ist als einziges bewegliches Element in einer Werkzeughälfte lediglich eine um 180° um eine axiale Richtung drehbare Indexplatte notwendig, die die z. B. im vorherigen Schritt gespritzten Lichtleiterstifte in die fluchtende Lage zu den Kanälen des Grundkörpers bringen und vorzugsweise auch in fluchtende Lage zu einem Werkzeugschieber, der in dieser Position als z. B. fest oder ausfahrbar am Düsenwerkzeug angeordnete Schiebervorsprünge ausgebildet sind und damit nicht einmal zwingend beweglich gegenüber der sie tragenden Werkzeughälfte ausgebildet sei müssen, sondern ihre Wirkung ausschließlich durch Schließen des Werkzeuges, also gegeneinander Bewegen von Auswerferwerkzeug und Düsenwerkzeug, bis sich deren Kontaktflächen dicht berühren, erfüllen.

Ob die Lichtleiterstifte nach dem Einschieben lediglich kraftschlüssig und/ oder formschlüssig, beispielsweise mittels verrasten, in den sie aufnehmenden Kanälen des Grundkörpers fixiert sind, hängt einerseits vom späteren Einsatzzweck ab und den dabei auftretenden Randbedingungen wie Stärke der Erschütterung und ähnliches, als auch vom gewählten Herstellungsprozess:
Wenn beispielsweise die Frontplatte erst nach dem Einschieben der Lichtleiterstifte hergestellt und damit außer am Grundkörper auch an den Lichtleiterstiften angespritzt wird, ist eine kraftschlüssige Fixierung bis zum Anspritzen der Frontplatte ausreichend, was unter anderem durch ein in der Einschiebestellung verbleibendes Schieberwerkzeug erreicht werden kann, bis das Spritzen der Frontplatte abgeschlossen ist.

Bei vorherigem Spritzen der Frontplatte muss dagegen die gewählte kraftschlüssige oder formschlüssige Fixierung der Lichtleiterstifte im Grundkörper auf Dauer deren dortige Positionierung sicherstellen.

In jedem Fall ist eine in Einschieberichtung konische, zum vorderen einzuschiebenden Ende hin sich verjüngende, Kontur von Lichtleiterstift und/oder umgebenden Kanal zu bevorzugen, um das Einschieben zu erleichtern.

Weiterhin kann wenigstens eine der Werkzeug-Hälften zusätzlich eine zerspanende Werkzeugeinheit, insbesondere eine Fräs-Einheit, Dreh-Einheit oder Bohr-Einheit, eine Laser-Einheit und/oder eine Füge-Einheit aufweisen, mit deren Hilfe noch in der Spritzguss-Maschine weitere Fertigungs- oder Montageoperationen durchgeführt werden können.

Auf diese Art und Weise wird ohne eine separate Montagemaschine lediglich mit Hilfe einer entsprechend ausgebildeten Spritzgießmaschine und ohne manuelle Montageschritte eine Abdeckung hergestellt, die einen Grundkörper aus lichtundurchlässigem Material sowie eine lichtundurchlässige Schicht auf ihrer Frontplatte, insbesondere einer Frontplatte aus durchsichtigem Material, besitzt und bei der die Lichtleitestifte in entsprechenden Kanälen des Grundkörpers sitzen, ohne entlang ihrer Seitenflächen mit diesem Grundkörper verklebt oder verschmolzen zu sein, wodurch eine optimale Lichtleitung in Verlaufsrichtung der Lichtleiterstifte erzielt wird.

### c) Ausführungsbeispiele

Ausführungsformen gemäß der Erfindung sind im Folgenden beispielhaft näher beschrieben. Es zeigen:
- Fig. 1a:: eine erfindungsgemäße Abdeckung,
- Fig. 1b-d:: konstruktiv unterschiedliche Detaillösungen,
- Fig. 2:: eine weitere Variante der Abbildung gemäß Figur 1a,
- Fig. 3:: das Düsenwerkzeug,
- Fig. 4:: das Auswerferwerkzeug
- Fig. 5:: den Einschiebevorgang der Lichtleiterstifte.

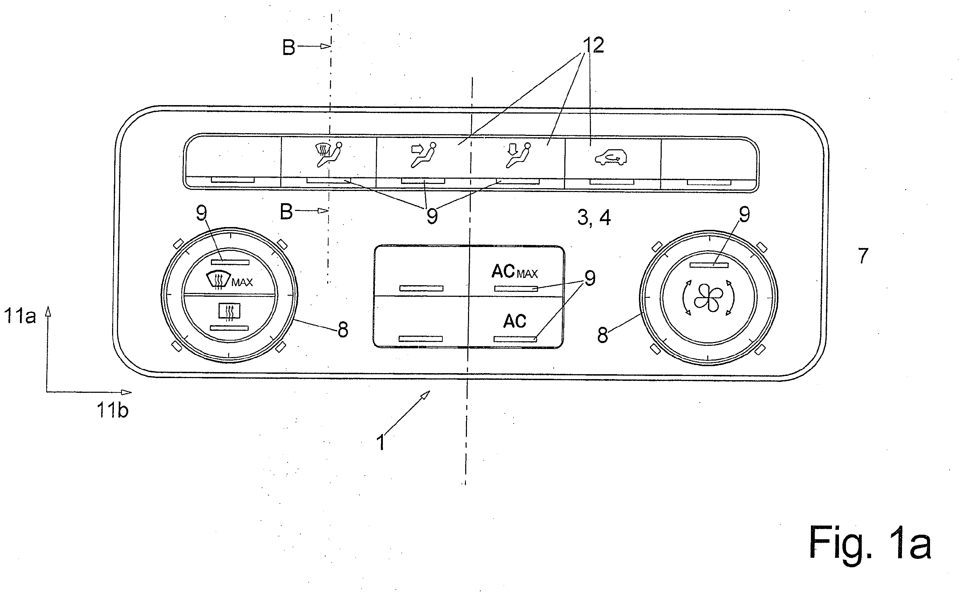

In Figur 1a ist ein typischer Anwendungsfall für eine Abdeckung dargestellt, nämlich eine Abdeckung 1 in der Armaturentafel 7 eines Kraftfahrzeuges, wobei in der Abdeckung 1 die Bedien- und Anzeigeelemente für die Heiz- und Klimatisierungsfunktionen des Kraftfahrzeuges untergebracht sind.

Wie die Frontansicht auf die Abdeckung 1 in Figur 1a zeigt, besteht diese im Wesentlichen aus zwei Drehreglern 8, die jeweils drehbar in der Frontplatte 3 der Abdeckung 1 angeordnet sind, und jeweils ein oder zwei von hinten beleuchtbare Funktionsanzeigen 9 aufweisen.

Im oberen Bereich sind nebeneinander eine Reihe von Drucktastern 12 angeordnet, unter denen sich ebenfalls wiederum einzeln hinterleuchtbare Funktionsanzeigen 9 befinden.

In der Regel bedeutet dabei das Leuchten der jeweiligen Funktionsanzeige 9, dass die entsprechende Funktion aktiviert ist.

Von einer solchen Abdeckung 1 existieren selbst für ein einziges Krafftfahrzeugmodell in der Regel viele Varianten, je nachdem, welche Funktionen und Ausstattungsmerkmale der Kunde für sein Fahrzeug gewählt hat.

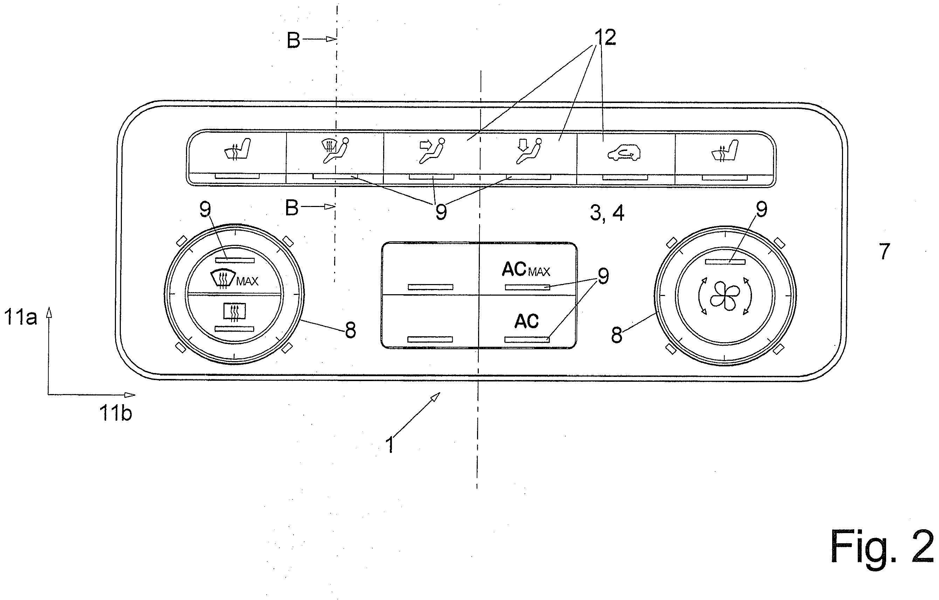

Figur 2 zeigt eine gegenüber Figur 1a abgewandelte Abdeckung, in der die beiden äußersten Drucktaster ebenfalls belegt sind und dementsprechend auch beleuchtbare Funktionsanzeigen darunter vorhanden sind.

Von einer einzigen Abdeckung wie der Dargestellten können somit in der Praxis bis zu 10 Varianten oder auch mehr existieren.

Die in Figur 1a dargestellte Abdeckung umfasst dabei bereits mindestens 19 Funktionsanzeigen, was keineswegs die Obergrenze darstellen muss.

Aus dem Vorstehenden wird klar, dass die einzelnen Funktionsanzeigen 9 jeweils einzeln von hinten beleuchtbar sein müssen und bei Beleuchtung einer der Funktionsanzeigen 9 die daneben befindliche Funktionsanzeige kein Licht erhalten darf.

Gerade bei den eng nebeneinander liegenden Funktionsanzeigen unter den Drucktastern 12 für die Sitzheizung wird klar, dass dies nur durch eine abgeschottete Funktionsanzeige 9 erreicht werden kann.

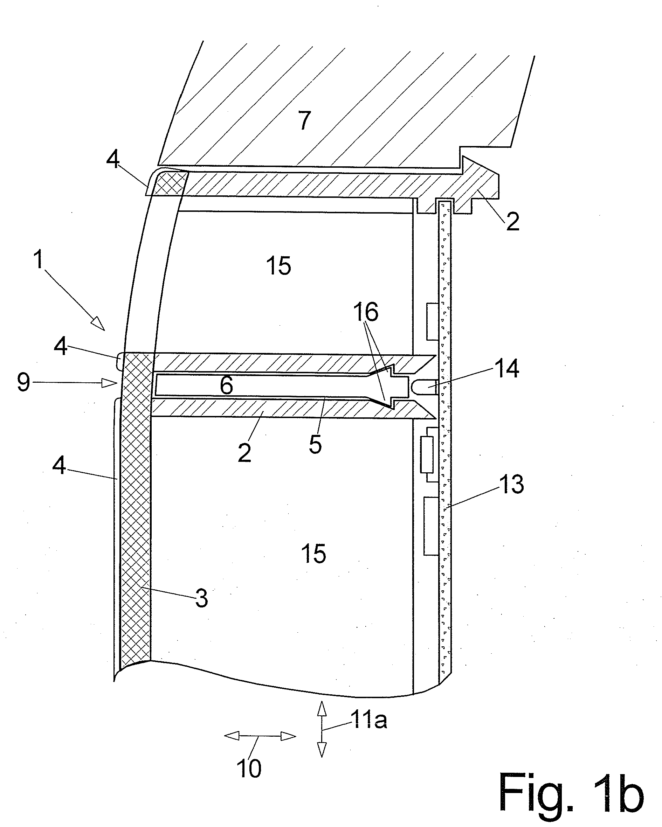

Die Figuren 1b bis d zeigen einen Schnitt entlang der Linie B-B durch den oberen Teil der Abdeckung 1.

Daraus wird ersichtlich, dass die Abdeckung 1 - hier bereits in der Armaturentafel 7 - nicht nur aus der in Figur 1a sichtbaren Frontplatte 3 besteht, sondern aus einem davon sich von der Rückseite der Frontplatte 3 in die Tiefenrichtung 10 erstreckenden Grundkörper 2 bestehend aus hauptsächlich sich in die Tiefenrichtung 10 erstreckenden Wänden und Streben, die einerseits zur Stabilisierung der Frontplatte 3 dienen und andererseits zum Befestigen einerseits in der aufnehmenden Armaturentafel 7 als auch zur Aufnahmen weiterer Elemente, beispielsweise der im hinteren Endbereich des Grundkörpers 2 angeordneten Platine 13. Auf dieser befinden sich elektrische Schaltelemente, die mit den Bedienelementen wie Drucktastern 12 und Drehreglern 8 in der Frontplatte 3 in Verbindung stehen und unter anderem die Lichtquellen, in der Regel Leuchtdioden 14, auf ihrer der Frontplatte 3 zugewandten Vorderseite tragen, von denen jeweils eine der Funktionsanzeigen 9 hinterleuchten soll.

Die Platine 13 erstreckt sich in der Regel entlang der gesamten Fläche der Abdeckung 1 oder nur über deren Teilbereiche.

In Figur 1b ist die Abdeckung 1 ein einstückig hergestelltes Bauteil, bei dem die beiden Teile, nämlich Grundkörper 2 und Frontplatte 3, zwar aus unterschiedlichen Kunststoffen bestehen, aber direkt aneinander angespritzt und damit miteinander verschmolzen sind.

Dabei besteht der Grundkörper 2 aus lichtundurchlässigem Material, vor allem um zu verhindern, dass durch die mittels der einzelnen Wände des Grundkörpers 2 gebildeten Kammern 15, beispielsweise den Stiftkanal 5, der am vorderen Ende durch die davor durchgehende Frontplatte 3 verschlossen wird oder die nach vorne offene obere Kammer 15, die zum Einsetzen eines nicht dargestellten Drucktasters 12 dient, kein Licht von einer Kammer 15 in die benachbarte Kammer, beispielsweise den Stiftkanal 5, gelangen kann und umgekehrt.

Die Frontplatte 3 besteht aus einem lichtdurchlässigen, meist glasklaren oder mattklaren, Kunststoff. Da jedoch nur definierte lichtdurchlässige Bereiche, beispielsweise in Form der Funktionsanzeige 9, in der Frontplatte 3 vorhanden sein sollen, wird diese nach ihrer Herstellung mit einer lichtundurchlässigen Schicht 4 auf ihrer dem Benutzer zugewandten Vorderseite zunächst durchgängig beschichtet, und an denjenigen Stellen, an denen eine Hinterleuchtung ermöglicht werden soll, beispielsweise den Flächen der Funktionsanzeigen 9, anschließend durch Laserbeschuss wieder konturenscharf entfernt.

In Figur 1b ist ersichtlich, dass sich die die Funktionsanzeige 9 beleuchtende Leuchtdiode 14 relativ weit von der Vorderseite der Frontplatte 3 beabstandet befindet, in der Praxis z. B. 2 bis 3 cm entfernt.

Damit die Funktionsanzeige 9 dennoch für den Betrachter stark beleuchtet erscheint, sind zum einen die den Stiftkanal 5 umgebenden Wände mit einer hellen Farbe ausgeführt oder beschichtet, vorzugsweise in weiß, was eine gute Reflektion und damit Weiterleitung des Lichts zur vorderen Funktionsanzeige 9 bewirkt.

Zu diesem Zweck ist vorzugsweise der gesamte Grundkörper 2 aus undurchsichtigem, weißem Material gespritzt, was eine separate Beschichtung der Wände der Stiftkanalöffnungen 5 mit einer Farbe vermeidet.

Um darüber hinaus die Lichtausbeute auf der Vorderseite der Frontplatte 3, also an der vom Benutzer sichtbaren Funktionsanzeige 9, zu steigern, ist in dem Stiftkanal 5 ein Lichtleiterstift 6 angeordnet, der aus durchsichtigem, vorzugsweise glasklarem, Kunststoff besteht, und die Distanz zwischen der Leuchtdiode 14, also etwa dem hinteren Ende des Stiftkanals 5, und dessen vorderen Ende, also der Rückseite der Frontplatte 3, überbrückt und den Querschnitt des Stiftkanals 5 im Wesentlichen ausfüllt.

Das in die Rückseite des Lichtleiterstiftes eingeleitete Licht wird an dessen Seitenwänden durch Reflektion bzw. Totalreflektion vollständiger reflektiert als ohne Lichtleiterstift an den den Stiftkanal 5 umgebenden Wänden in Form des Grundkörpers 2, die einen Teil des Lichts absorbieren, so dass am vorderen Ende, der Stirnfläche des Lichtleiterstiftes 6, eine größere Lichtmenge ankommt als ohne Lichtleiterstift.

Deshalb ist in Figur 1b der Lichtleiterstift 6 separat hergestellt und nachträglich von hinten in das hintere offene Ende des Stiftkanals 5 eingeschoben bis zur Rückseite der Bereits an den Grundkörper 2 angespritzten Frontplatte 3, wo er beispielsweise mittels der dargestellten Rastnase 16 formschlüssig - wie an der Oberseite dargestellt - verrastet, oder Kraftschlüssig klemmt - wie in der unteren Hälfte dargestellt.

Figur 1b zeigt weiterhin, dass die Frontseite der Frontplatte 3 zumindest in der in Figur 1b sichtbaren Querrichtung 11a gewölbt ist und ebenso deren Rückseite.

Häufig ist auch in der anderen Querrichtung 11b eine Wölbung vorhanden. Beides zusammen bedingt, dass die vielen in einer solchen Abdeckung 1 vorhandenen Lichtleiterstifte 6 nicht identisch sind, sondern sich fast immer durch kleine Abweichungen hinsichtlich Länge, Positionierung der Rastnasen 16 oder andere Details unterscheiden, so dass in jeden vorhandenen Stiftkanal ein ganz spezifisch hergestellter Lichtleiterstift 6 eingesetzt werden muss.

Der Übergang des Lichts von der vorderen Stirnfläche des Lichtleiterstiftes 6 in die Rückseite der aus durchsichtigem Material bestehenden Frontplatte 3 ist umso besser, je inniger der Kontakt zwischen diesen beiden Elementen ist.

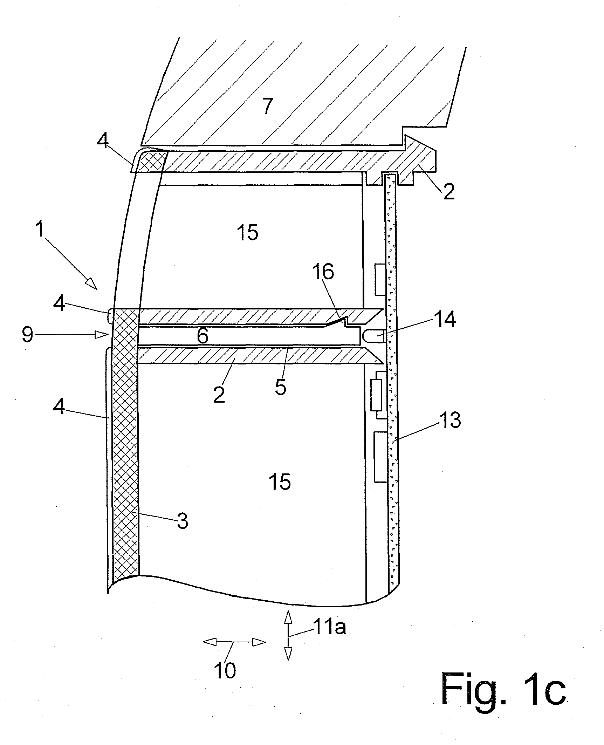

Der beste Lichtübergang wird erzielt, wenn die Frontfläche des Lichtleiterstiftes 6 mit der Frontplatte 3, also deren Rückseite, verschmolzen ist, wie in Figur 1c dargestellt. Dies erfordert jedoch in aller Regel, dass die Frontplatte 3 erst nach dem Einschieben der Lichtleiterstifte 6 in den Grundkörper 2 an diese beiden Teile angespritzt wird. Eine Sonderlösung wäre die Herstellung gemäß Figur 1b und danach das Verschweißen der Teile 6 und 3 z.B. mittels Laser durch die Frontplatte 3 hindurch mittels z.B. entsprechender Fokussierung des Laserstrahls.

Dagegen sollen die Seitenflächen des Lichtleiterstiftes 6 weitestgehend nicht mit den umgebenden Wänden des Grundkörpers 2 verschmolzen oder auch nur verklebt sein, da dies gerade eine gute Lichtableitung seitlich in den Grundkörper hinein bewirken würde. Dieses dorthin abgeleitete und dort absorbierte Licht reduziert die an der Funktionsanzeige 9 ankommende Lichtmenge.

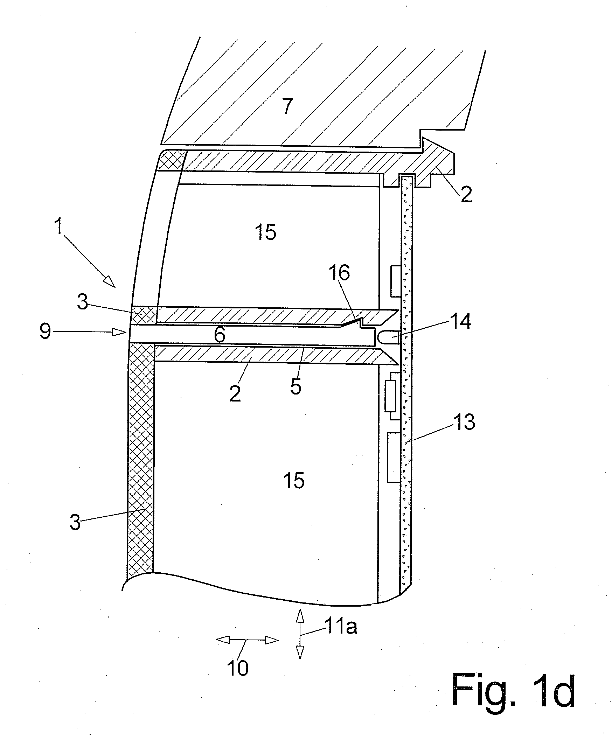

Figur 1d zeigt jedoch eine Lösung, bei der die Seitenflächen der Lichtleiterstifte 6 im vorderen Bereich mit der Frontplatte 3 verschmolzen sind. Um dies zu erreichen, werden die Lichtleiterstifte 6 - wie bei Figur 1c erläutert - in den Grundkörper 2 eingeschoben, allerdings in diesem Fall mit einem Überstand des vorderen Endes der Lichtleiterstiftes 6 über den Grundkörper 2 entsprechend der Dicke der gewünschten Frontplatte 3 und erst danach an die beiden Teile die Frontplatte 3 angespritzt.

Bei dieser Lösung besteht die anschließend angespritzte Frontplatte 3 nicht aus lichtdurchlässigem Material, sondern aus lichtundurchlässigem Material, so dass über die angeschmolzenen Seitenflächen der Lichtleiterstifte 6 kaum Licht zur Seite abgeleitet und absorbiert wird.

Der Lichtleiterstift 6 mündet dann in der Frontfläche der Frontplatte 3, wobei die technische Schwierigkeit darin besteht, dass beim anschließenden Anspritzen der Frontplatte 3 dessen Material nicht vor die Stirnfläche des Lichtleiterstiftes 6 gerät und diese ganz oder teilweise abdeckt.

Da die Frontplatte 3 ab hier aus lichtundurchlässigem Material besteht, ist auch das anschließende Aufbringen einer zusätzlichen lichtundurchlässigen Schicht 4 auf der Frontseite der Frontplatte 3 nicht notwendig.

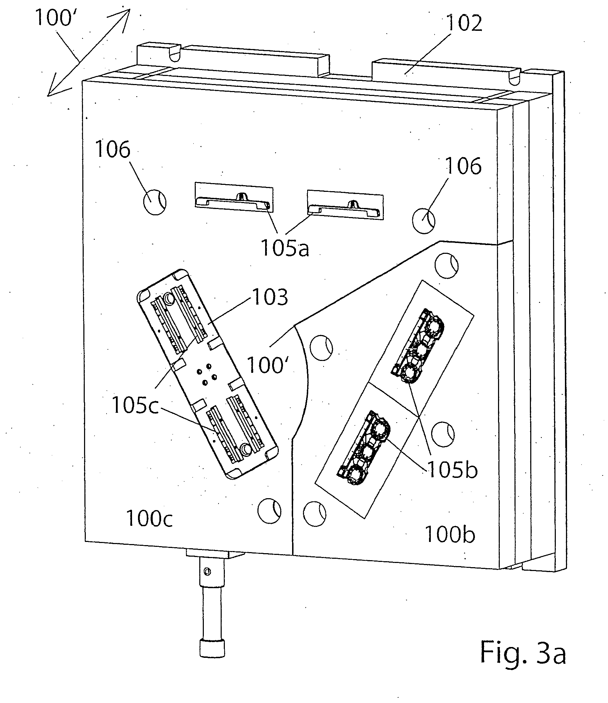

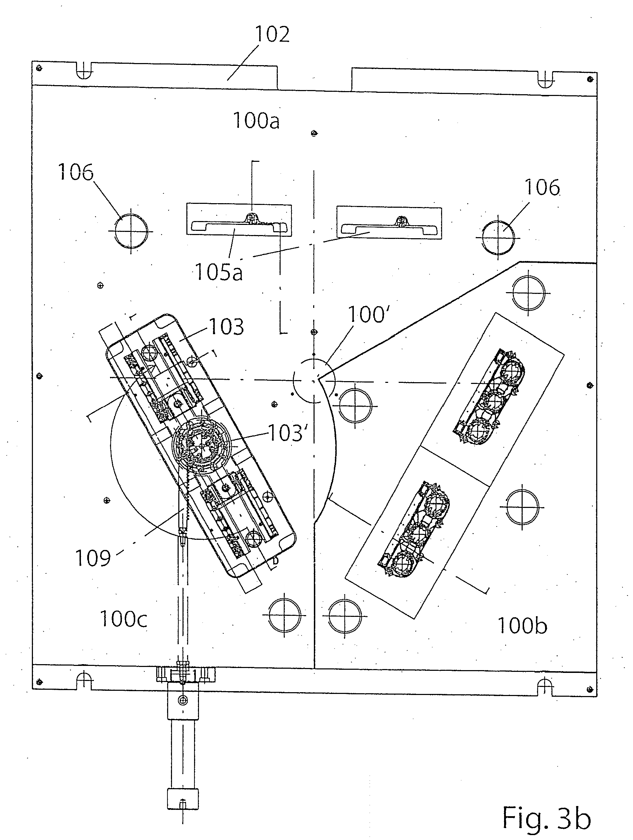

Die Figuren 3 bis 5 zeigen die Herstellung der Abdeckung 1 einschließlich deren Bestückung mit Lichtleiterstiften 6:
Die Abdeckung 1, also der Grundkörper 2 ebenso wie die Frontplatte 3 und auch die Lichtleiterstifte 6, werden im Spritzgussverfahren hergestellt in einem Spritzwerkzeug 100, welches bekanntermaßen aus zwei Werkzeugteilen, dem Außenwerferwerkzeug 101 und dem Düsenwerkzeug 102, besteht die mit ihren gegeneinander gerichteten Kontaktflächen 101a, 102a zum Spritzen des Kunststoffteiles davon dicht gegeneinander gepresst werden.

In den Kontaktflächen 101a, 102a sind jeweils Vertiefungen, die sogenannten Kavitäten 105a, b, c ausgebildet, die so positioniert sind, dass bei aneinander gelegten Kontaktflächen die Kavitäten in den beiderseitigen Kontaktflächen in der richtigen Relativlage zueinander stehen, insbesondere zueinander fluchten.

Dadurch entsteht ein allseits vom Spritzwerkzeug 100 umschlossener Hohlraum, in den über nicht dargestellte Einspritzdüsen im Düsenwerkzeug 102 flüssiger Kunststoff eingespritzt wird und nach Erkalten das so hergestellte Teil - nachdem Auswerferwerkzeug 101 und Düsenwerkzeug 102 in der Axialrichtung 100', also der Lotrechten zu den Kontaktflächen 101a, 102a, auseinander gefahren wurden - z. B. mittels nicht dargestellter Auswerfer im Auswerferwerkzeug 101 aus dessen Kontaktfläche 101a herausfallen oder entnommen werden können, in der sie nach dem Auseinanderfahren des Werkzeuges noch verblieben sind.

Dabei kann durch Festlegen der Trennebene in Form der gegeneinander gelegten Kontaktflächen 101a, 101b, der Gesamtkavität und anderen Maßnahmen festgelegt werden, ob nach dem Herstellen des Spritzteiles dieses vorübergehend bis zur Entnahme im Auswerferwerkzeug 101 oder im Düsenwerkzeug 102 verbleibt.

Damit beim Schließen des Werkzeuges 100 die wechselseitigen Kavitäten 105a, b, c von Auswerferwerkzeug 101 und Düsenwerkzeug 102 passgenau aufeinander treffen, sind in diesen Werkzeugen jeweils in Axialrichtung 100' verlaufende Führungsbuchsen 106 vorhanden, durch die sich im Einsatz des Werkzeuges 100 nicht dargestellte Führungsstangen erstrecken.

Während normalerweise sowohl Auswerferwerkzeug 101 als auch Düsenwerkzeug 102 in Axialrichtung 100' betrachtet eine viereckige Grundform besitzen, gilt dies im vorliegenden Fall nur für das Düsenwerkzeug 102, während das Auswerferwerkzeug 101 eine runde Form aufweist, oder zumindest auf einer runden Grundplatte 107 an seiner Rückseite aufgebracht ist.

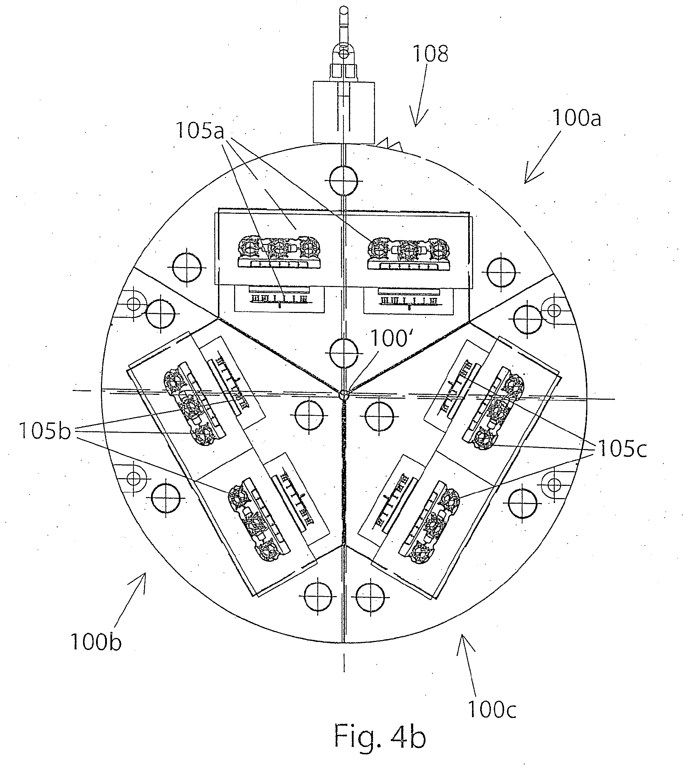

Dies dient dazu, um auf dem Außenumfang des runden Auswerferwerkzeuges 102 oder wenigstens der runden Grundplatte 107 eine Verzahnung 108 aufbringen zu können, wie in Figur 4b angedeutet, mittels der durch Eingriff und Antrieb eines nicht dargestellten Ritzels das Auswerferwerkzeug 101 um seine in axialer Richtung 100' verlaufende Mittelachse 100' gedreht werden kann und zwar um einen definierten Drehwinkel.

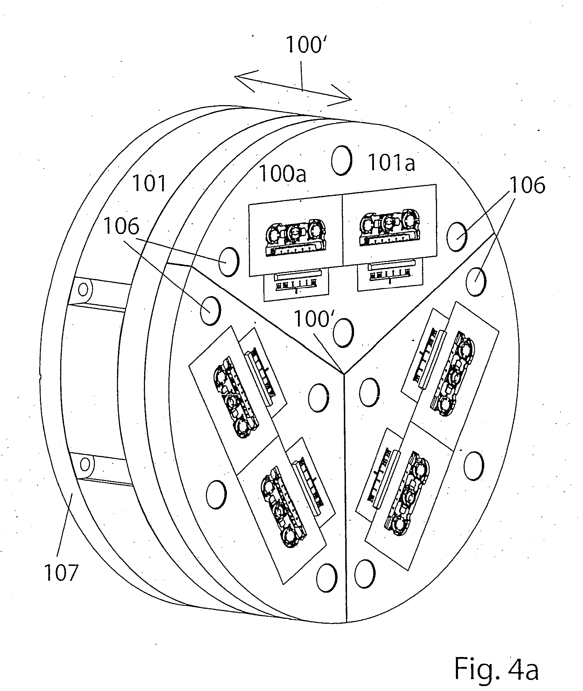

Wie die Figuren 4 erkennen lassen, ist das Auswerferwerkzeug 101 in drei Sektionen 100 a, b, c unterteilt, bei denen es sich im vorliegenden Fall auch um separate Einzelteile handelt, und in jeder Sektion in gleicher radialer Lage, lediglich um 120° bezüglich der Mittelachse 100' verdreht, Kavitäten 105a, b, c vorhanden sind.

Da die Abdeckung 1 in diesem Fall mit ihrer Vorderseite der Frontplatte 3 in das Auswerferwerkzeug 101 hineinweisend erstellt wird, ist im Auswerferwerkzeug 101 in allen drei Kavitäten 105a, b, c die Kontur der Vorderseite der Frontplatte 3 erkennbar und daneben in jeder Sektion die Kavitäten zum Herstellen aller für diese Abdeckung 1 benötigten Lichtleiterstifte 6.

Der Herstellungsablauf ist dabei so, dass im ersten Spritzschritt in der Sektion 100a die Frontplatte 3 gespritzt wird, anschließend das Auswerferwerkzeug 101 um 120° weitergedreht wird mit der darin bereits hergestellten Frontplatte 3 und in Sektion 100b an die Frontplatte 3 der Grundkörper 2 angespritzt wird.

In diesem zweiten Spritzschritt wird natürlich in der ersten Sektion 100a zeitgleich erneut eine Frontplatte 3 gespritzt.

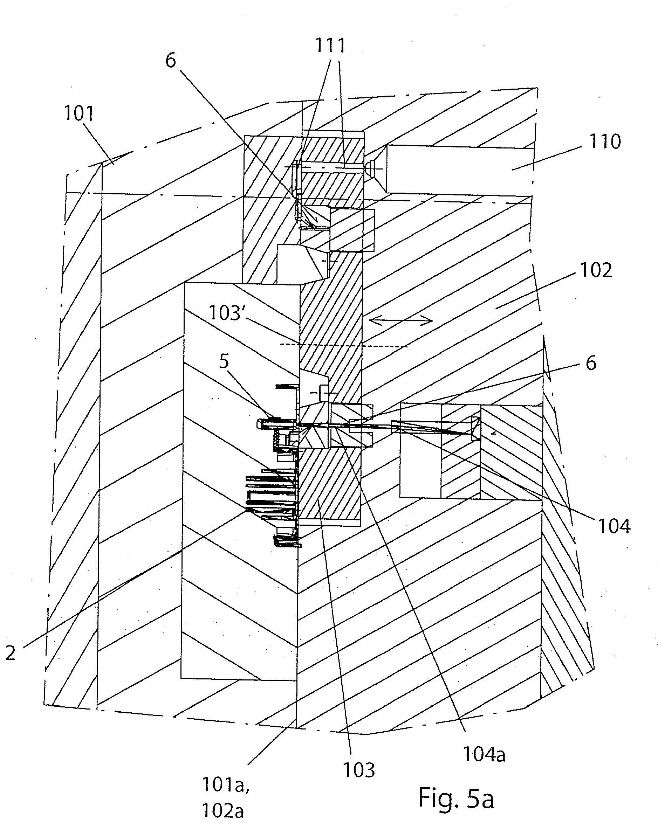

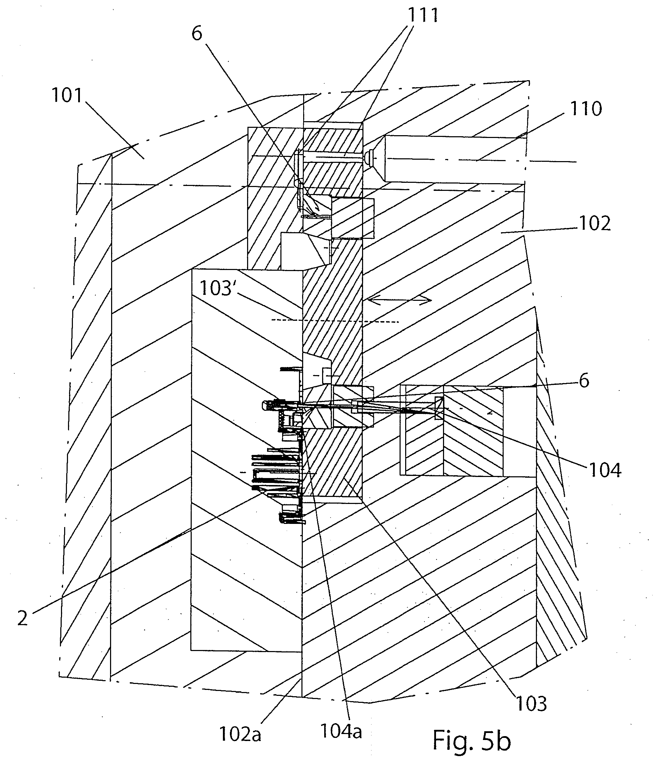

Nach erneutem Weiterdrehen des Auswerferwerkzeuges 101 um 120° zusammen mit der in der Sektion 100b fertig hergestellten Abdeckung 1 werden in Sektion 100c im dritten Spritzschritt neben der bereits fertig gestellten Abdeckung 1 die Lichtleiterstifte 6 gespritzt und auch in die Abdeckung 100 eingesetzt, wie später anhand der Figuren 5 und 1b erläutert wird.

In diesem dritten Spritzschritt wird natürlich wiederum zeitgleich in Sektion 100a erneut eine Frontplatte 3 gespritzt und in Sektion 100b erneut an die dort befindliche Frontplatte 3 ein Grundkörper 2 angespritzt.

im Düsenwerkzeug 102 angeordnet ist, und hydraulisch axial relativ zum Düsenwerkzeug 102 in Richtung Auswerferwerkzeug 101 ausfahrbar ist, aus der Indexplatte 103 in die Stiftkanäle 5 und damit die Abdeckung 1, oder dem Grundkörper 2, die sich in dem Auswerferwerkzeug 101 befinden, eingeschoben bis in die endgültige Montageposition.

Zu diesem Zweck werden vor Ausfahren des Werkzeugschiebers 104 Auswerferwerkzeug 101 und Düsenwerkzeug 102 wieder gegeneinander gefahren, vorzugsweise bis ihre Kontaktflächen 101a und 102a gegeneinander anliegen, wie in Figur 5 dargestellt.

Nach Zurückziehen des Werkzeugschiebers 104 und Auseinanderfahren von Auswerferwerkzeug 101 und Düsenwerkzeug 102 kann die fertig mit Lichtleiterstiften 6 bestückte Abdeckung 1 aus der Sektion 100c des Auswerferwerkzeuges 101 entnommen werden.

In Figur 5 ist jedoch der davon abweichende Fall dargestellt, dass nämlich zunächst nur der Grundkörper 2 mittels Spritzen hergestellt wird und in dessen Sacklöcher die Lichtleiterstifte 6 mittels des Werkzeugschiebers 104 eingeschoben werden, und zwar von der dann noch offenen Vorderseite der Sacklöcher, die erst nach dem Einsetzen der Lichtleiterstifte 6 die Frontplatte 3 angespritzt wird, und damit auch an die vordere Stirnfläche der Lichtleiterstifte 6 mit angespritzt wird.

Dementsprechend zeigt der in dem Auswerferwerkzeug 101 bereits gespritzte Grundkörper mit seiner Vorderseite zur Kontaktfläche 101a bzw. 102a zwischen den beiden Werkzeughälften hin.

In Figur 5a ist der Werkzeugschieber 104 in seiner zurückgezogenen Position dargestellt. Die Lichtleiterstifte 6 befinden sich noch in der Indexplatte 103.

In Figur 5b befinden sich der Werkzeugschieber 4 in der vorgeschobenen Position und die Lichtleiter 6 bereits in dem dafür vorgesehenen Stiftkanal 5.

Gleichzeitig kann in dieser Drehlage die Indexplatte 103 - wie in der oberen Hälfte der Indexplatte 103 sichtbar - ein Satz von Lichtleiterstiften 6 gespritzt werden:
Von der Spritzdüse 17 im Düsenwerkzeug 102 gelangt der flüssige Kunststoff über einen Verbindungskanal 111 in die Kavität 105c, wobei sich der Verbindungskanal durch die Indexplatte 3 hindurch erstreckt und entlang der Kontaktfläche des Auswerferwerkzeuges 101 radial bezüglich der Längsmittelachse 100' nach innen bis zur Kavität 105c erstreckt, die sich in der Indexplatte 103 befindet.

### BEZUGSZEICHENLISTE

- 1: Abdeckung
- 2: Grundkörper
- 3: Frontplatte
- 4: Licht undurchlässige Schicht
- 5: Stiftkanal
- 6: Lichtleiter-Stift
- 7: Armaturentafel
- 8: Drehregler
- 9: Funktionsanzeige
- 10: Tiefenrichtung
- 11a, b: Querrichtung
- 12: Drucktaster
- 13: Platine
- 14: Leuchtdioden
- 15: Kammer
- 16: Rastnase

- 100: Spritzwerkzeug
- 100': Axial-Richtung, Mittelachse
- 100 a,b,c: Sektion
- 101: Auswerfer-Werkzeug
- 101a: Kontaktfläche
- 102: Düsen-Werkzeug
- 102a: Kontaktfläche
- 103: Werkzeugteil, Indexplatte
- 103': Mittelachse
- 104: Werkzeugschieber
- 105a, b c: Kavität
- 106: Führungsbuchse
- 107: Grundplatte
- 108: Verzahnung
- 109: Zahnstange
- 110: Spritzdüse
- 111: Verbindungskanal

### BEZUGSZEICHENLISTE

- 1: Abdeckung
- 2: Grundkörper
- 3: Frontplatte
- 4: Licht undurchlässige Schicht
- 5: Stiftkanal
- 6: Lichtleiter-Stift
- 7: Armaturentafel
- 8: Drehregler
- 9: Funktionsanzeige
- 10: Tiefenrichtung
- 11a, b: Querrichtung
- 12: Drucktaster
- 13: Platine
- 14: Leuchtdioden
- 15: Kammer
- 16: Rastnase

- 100: Spritzwerkzeug
- 100': Axial-Richtung, Mittelachse
- 100 a,b,c: Sektion
- 101: Auswerfer-Werkzeug
- 101a: Kontaktfläche
- 102: Düsen-Werkzeug
- 102a: Kontaktfläche
- 103: Werkzeugteil, Indexplatte
- 103': Mittelachse
- 104: Werkzeugschieber
- 105a, b c: Kavität
- 106: Führungsbuchse
- 107: Grundplatte
- 108: Verzahnung
- 109: Zahnstange
- 110: Spritzdüse
- 111: Verbindungskanal

## Patentansprüche

1. Verfahren zum Herstellen einer Abdeckung (1) aus gespritztem Kunststoff mit
- einem Grundkörper (2) und einer einstückig damit verbundenen Frontplatte (3),
- wenigstens einem auf der Rückseite (2b) des Grundkörpers (2) offenen Stiftkanal (5) im Grundkörper (2),
- wenigstens einem Lichtleiter-Stift (6) aus lichtdurchlässigem Kunststoff, der sich in dem Stiftkanal (5) befindet,
indem mittels eines Spritz-Werkzeuges (100) nacheinander
a) der Grundkörper (2) im Werkzeug (100) gespritzt wird und im Werkzeug (100) verbleibt
b) abseits des Grundkörpers (2) im gleichen Werkzeug (100) alle benötigten Lichtleiter-Stifte (6) gespritzt werden,
c) nach Öffnen des Werkzeuges (100) die, insbesondere alle, Lichtleiter-Stifte (6) gemeinsam axial mittels eines die Lichtleiter-Stifte (6) umgebenden Werkzeug-Teiles (103) aus dem Rest des Werkzeuges herausbewegt werden,
d) das Werkzeug-Teil (103) mit den Lichtleiter-Stiften (6) so bewegt wird, dass die Lichtleiter-Stifte (6) sich in fluchtender Position zu den Stiftkanälen (5) und deren offener Seite des im Werkzeug (100) befindlichen Grundkörpers (2) befinden und
e) das Werkzeug (100) geschlossen wird und dabei mittels eines axial bewegbaren Werkzeug-Schiebers (104) die Lichtleiter-Stifte (6) axial in die Stiftkanäle (5) des Grundkörpers (2) eingeschoben werden,
f) die Frontplatte (3) vor oder nach dem Einschieben der Lichtleiter-Stifte (6) im gleichen Werkzeug (100) direkt an den Grundkörper (2) angespritzt wird und
g) nach Öffnen des Werkzeuges (100) die mit den Lichtleiter-Stiften (6) bestückte Abdeckung (1) entnommen wird.

2. Verfahren nach Anspruch 1,
**dadurch gekennzeichnet, dass**
- die eine Werkzeughälfte des Werkzeuges (100), insbesondere das Auswerferwerkzeug (101), drehbar um die Axialrichtung (100') ist und
- Grundkörper (2), Frontplatte (3) und Lichtleiter-Stifte (6) in verschiedenen Sektionen (100 a, b, c) des gleichen Werkzeuges (100), insbesondere der nicht drehbaren Werkzeughälfte des Werkzeuges (100), gespritzt werden.

3. Verfahren nach einem der vorhergehenden Ansprüche,
**dadurch gekennzeichnet, dass**
- nach dem Spritzen von Grundkörper (2) und gegebenenfalls Frontplatte (3) in der einen Werkzeughälfte diese in der einen Werkzeughälfte, insbesondere dem Auswerferwerkzeug (101), verbleiben und die Lichtleiter-Stifte (6) nach der Herstellung in der anderen Werkzeughälfte zunächst in der anderen Werkzeughälfte, insbesondere dem Düsenwerkzeug (102), verbleiben, und
- der Werkzeugschieber (104) in derjenigen Werkzeughälfte angeordnet wird, in der die Lichtleiter-Stifte (6) nach ihrer Herstellung verbleiben, insbesondere im Düsenwerkzeug (102).

4. Verfahren nach einem der vorhergehenden Ansprüche,
**dadurch gekennzeichnet, dass**
- die Lichtleiter-Stifte (6) nach dem Spritzen in derjenigen Werkzeughälfte verbleiben, in der auch Grundkörper (2) und Frontplatte (3) verblieben sind,
- die Lichtleiter-Stifte (6) in dieser Werkzeughälfte mit ihrer Frontfläche in diese Werkzeughälfte hinein weisenden vorderen Stirnflächen hergestellt werden,
- der Werkzeugschieber (104) vorzugsweise in der anderen Werkzeughälfte angeordnet ist, und
- das Werkzeugteil (103), insbesondere die Indexplatte (103) in der gleichen Werkzeughälfte angeordnet ist.

5. Verfahren nach einem der vorhergehenden Ansprüche,
**dadurch gekennzeichnet, dass**
das Spritzwerkzeug (100) zwischen den beiden Werkzeughälften eine Wendeplatte umfasst, die um eine Achse quer zur Axialrichtung (100') um 180° verschwenkbar ist, und die Lichtleiter-Stifte (6) nach dem Spritzen in der Wendeplatte verbleiben und durch Verschwenken der Wendeplatte in die zu den Stiftkanälen (5) fluchtende Position auf deren offene Seite gebracht werden.

6. Verfahren nach einem der vorhergehenden Ansprüche,
**dadurch gekennzeichnet, dass**
das Werkzeugteil (103) eine Indexplatte (103) ist, welches um seine axiale Achse, insbesondere Mittelachse (103') gedreht, insbesondere um 180° gedreht wird.

7. Verfahren nach einem der vorhergehenden Ansprüche,
**dadurch gekennzeichnet, dass**
der Werkzeugschieber (104) mechanisch, hydraulisch oder pneumatisch axial bezüglich des ihn tragenden Werkzeuges (100) verschoben wird.

8. Verfahren nach einem der vorhergehenden Ansprüche,
**dadurch gekennzeichnet, dass**
die Lichtleiter-Stifte (6) in den Kanälen (5, 5') formschlüssig verrastet und/oder kraftschlüssig eingepresst sind.

9. Verfahren nach einem der vorhergehenden Ansprüche,
**dadurch gekennzeichnet, dass**
die Lichtleiterstifte (6) in die Durchgangskanäle (5') des Grundkörpers (2) soweit eingeschoben werden, dass sie über dessen Frontfläche vorstehen.

10. Verfahren nach einem der vorhergehenden Ansprüche,
**dadurch gekennzeichnet, dass**
beim Spritzen der Frontplatte die bereits in den Grundkörper (2) eingeschobenen Lichtleiterstifte (6) auf ihrer Rückseite vom Werkzeugschieber (104) in Position gehalten werden.

11. Spritzguss-Werkzeug (100) für ein Verfahren nach einem der Ansprüche 1 bis10, mit zwei Werkzeug-Hälften, insbesondere Auswerfer-Werkzeug (101) und Düsen-Werkzeug (102), die beim Spritzen mit ihrem Kontakt-Flächen gegeneinander gepresst werden, wobei
- beide Werkzeug-Hälften mehrere Sektionen (100 a,b,c) mit je mindestens einer Spritz-Kavität darin aufweisen,
- eine Werkzeug-Hälfte, insbesondere das Auswerfer-Werkzeug (101) gesteuert drehbar um die Axial-Richtung (100') von einer zur nächsten Sektion (100 a,b,c) ist,
**dadurch gekennzeichnet, dass**
- im Werkzeug (100), insbesondere der nicht drehbaren Werkzeug-Hälfte, insbesondere dem Düsen-Werkzeug (102), insbesondere nur in einer Sektion, ein Werkzeugteil (103) vorhanden ist, das axial aus der Kontaktfläche dieses Werkzeuges (100) heraus verfahrbar und im ausgefahrenen Zustand
- entweder um die axiale Richtung (100') verschwenkbar, insbesondere um 180° verschwenkbar, ist
- oder quer zur axialen Richtung (100') verlagerbar ist, wobei vorzugsweise in einer Werkzeughälfte, insbesondere der nicht drehbaren Werkzeughälfte, insbesondere dem Düsen-Werkzeug (102), in einer Sektion ein Werkzeugschieber (104) vorhanden ist, der verschiebbar in der Axialrichtung (100') ist, und der fluchtend zu dem verlagerten Werkzeugteil (103) im Werkzeug angeordnet ist,
- oder um eine Querachse zur axialen Richtung (100') verschwenkbar, insbesondere um 180° verschwenkbar ist.

12. Spritzguss-Werkzeug (100) nach Anspruch 11,
**dadurch gekennzeichnet, dass**
in wenigstens einer der Werkzeughälften ein zerspanende Werkzeugeinheit, insbesondere eine Fräs-Einheit, Dreh-Einheit oder Bohr-Einheit, eine Laser-Einheit und/oder eine Füge-Einheit angeordnet ist, die insbesondere zwischen einer aktivierten und deaktivierten Lage gegenüber der sie tragenden Werkzeug-Hälfte verlagerbar ist.

13. Abdeckung (1) aus gespritztem Kunststoff mit
- einem Grundkörper (2) und einer einstückig damit verbundenen Frontplatte (3)
- wenigstens einer lichtundurchlässigen, insbesondere frontseitigen, Schicht (4) auf der Frontplatte (3),
- wenigstens einem auf der Rückseite (2b) des Grundkörpers (2) offenen Stiftkanal (5) im Grundkörper (2),
- wenigstens einem Lichtleiter-Stift (6) aus lichtdurchlässigem Kunststoff, der sich in dem Stiftkanal (5) befindet,
**dadurch gekennzeichnet, dass**
der Lichtleiter-Stift (6) in seinem vorderen Endbereich mit der Frontplatte (3) verschmolzen und der Lichtleiter-Stift (6) mit den Wänden des Stiftkanals (5) des Grundkörpers (2) weder verschmolzen noch verklebt ist.

14. Abdeckung nach Anspruch 13,
**dadurch gekennzeichnet, dass**
- der Grundkörper (2) aus lichtundurchlässigem Material, insbesondere schwarzem oder weißem Material, besteht und/oder
- die Frontplatte (3) aus durchsichtigem Material besteht und die lichtundurchlässige frontseitige Schicht (4) eine Beschichtung auf der durchsichtigen Frontseite der Frontplatte (3) ist
- die Frontplatte (3) aus undurchsichtigem Kunststoff besteht und der Lichtleiter-Stift (6) die Frontplatte (3) durchdringt.

15. Abdeckung nach Anspruch 13 oder 14,
**dadurch gekennzeichnet, dass**
die Lichtleiterstifte (6) und/oder die Stiftkanäle (5, 5') einen unrunden, insbesondere rechteckigen, Querschnitt besitzen, der insbesondere von den Lichtleiterstiften (6) in mindestens einer der Querrichtungen, insbesondere vollständig, ausgefüllt ist.

16. Abdeckung nach einem der Ansprüche 13 bis 15,
**dadurch gekennzeichnet, dass**
die Lichtleiterstifte (6) und/oder die Stiftkanäle (5) sich von der hinteren Öffnung nach vorne verjüngen, insbesondere konisch verjüngen.

17. Abdeckung nach einem der Ansprüche 13 bis 16,
**dadurch gekennzeichnet, dass**
der Stiftkanal (5) auf der Vorderseite (2a) des Grundkörpers (2) von der Frontplatte (3) der Abdeckung (1) verschlossen ist.

## Claims

1. A method for producing a cover (1) from injection molded plastic material including
- a base element (2) and a front plate (3) integrally connected in one piece with the base element,
- at least one pin channel (5) provided in the base element (2) and open on a back side (2b) of the base element (2),
- at least one light conductor pin (6) made from light permeable plastic material and arranged in the pin channel (5),
wherein the following steps are sequentially performed by an injection molding tool (100):
a) the base element (2) is injection molded in the tool (100) and remains in the tool (100),
b) all required light conductor pins (6) are injection molded apart from the base element (2) in the same tool (100),
c) after opening the tool (100) the light conductor pins (6), in particular all light conductor pins (6) are jointly axially moved out of the rest of the tool by a tool element (103) that envelops the light conductor pins (6),
d) the tool element (103) with the light conductor pins (6) is moved so that the light conductor pins (6) are aligned with the pin channels (5) and their open side of the base element (2) arranged in the tool (100), and
e) the tool (100) is closed and the light conductor pins (6) are axially inserted into the pin channels (5) of the base element (2) by an axially movable tool slide (104),
f) the front plate (3) is molded in the same tool (100) directly at the base element (2) before or after inserting the light conductor pins (6), and
g) after opening of the tool (100) the cover (1) equipped with the light conductor pins (6) is retrieved.

2. The method according to claim 1,
**characterized in that**
- the first tool half (100), in particular the ejector tool (101) is rotatable about the axial direction (100'), and
- the base element (2), the front plate (3) and the light conductor pins (6) are molded in different sections (100 a, b, c) of the same tool (100), in particular of the non-rotatable tool half of the tool (100).

3. The method according to one of the preceding claims,
**characterized in that**
- after injection molding the base element (2) and optionally the front plate (3) in the first tool half they remain in the first tool half, in particular the ejector tool (101), and the light conductor pins (6) after being produced in the other tool half initially remain in the other tool half, in particular the nozzle tool (102), and
- the tool slide (104) is arranged in the tool half in which the light conductor pins (6) remain after being produced, in particular in the nozzle tool (102).

4. The method according to one of the preceding claims,
**characterized in that**
- the light conductor pins (6) remain after injection molding in the same tool half in which the base element (2) and the front plate (3) have remained,
- the light conductor pins (6) are produced in this tool half so that their front faces are oriented into this tool half,
- the tool slide (104) is advantageously arranged in the other tool half,
- the tool element (103), in particular the index plate (103) is arranged in the same tool half.

5. The method according to one of the preceding claims,
**characterized in that**
the injection molding tool (100) includes a reversal plate between the two tool halves wherein the reversal plate is pivotable by 180° about an axis that is transversal to the axial direction (100') and the light conductor pins (6) remain in the reversal plate after injection molding and are brought into a position that is aligned with the pin channels (5) on their open side by pivoting the reversal plate.

6. The method according to one of the preceding claims,
**characterized in that**
the tool element (103) is an index plate (103) which is rotated about its axis, in particular the center axis (103'), in particular by 180°.

7. The method according to one of the preceding claims,
**characterized in that**
the tool slide (104) is moved hydraulically or pneumatically in axial direction with reference to the tool (100) supporting the tool slide.

8. The method according to one of the preceding claims,
**characterized in that**
the light conductor pins (6) are interlocked in the channels (5, 5') in a form locking manner and/or impressed in a friction locking manner.

9. The method according to one of the preceding claims,
**characterized in that**
the light conductor pins (6) are inserted into the pass through channels (5') of the base element (2) far enough so that they protrude beyond its front face.

10. The method according to one of the preceding claims,
**characterized in that**
during injection molding the front plate the light conductor pins (6) that are already inserted into the base element (2) are retained in position on their back side by the tool slide (104).

11. An injection molding tool (100) configured for a method according to one of the claims 1 - 10 and comprising two tool halves, in particular an ejector tool (101) and a nozzle tool (102) that are pressed against each other with their contact surfaces during injection molding, wherein
- the two tool halves include plural sections (100a, b, c) respectively with at least one injection molding cavity included therein,
- one tool half, in particular the ejector tool (101), is rotatable in a controlled manner about the axial direction (100') from one section (100 a, b, c) to another, **characterized in that**
- in the tool (100), in particular the non-rotate able tool half, in particular in the nozzle tool (102), in particular only in one section a tool element (103) is provided that is axially movable out of the contact surface of the tool (100) and which is in its moved out condition,
- either pivotable about the axial direction (100'), in particular pivotable by 180°,
- or displaceable transversally to the axial direction (100') wherein advantageously in one tool half, in particular in the non-rotatable tool half, in particular the nozzle tool (102), a tool slide (104) is provided in one section which tool slide is movable in the axial direction (100') and arranged in the tool in alignment with the tool element (103) that is to be displaced,
- or pivotable about a transversal axis relative to the axial direction (100'), in particular pivotable by 180°.

12. The injection molding tool (100) according to claim 11,
**characterized in that**
a chipping tool unit is arranged in one of the tool halves, in particular a milling unit, a turning unit or a drilling unit, a laser unit and/or a joining unit which is displaceable in particular between an activated and a deactivated position relative to the tool half that supports the machine tool unit.

13. A cover (1) made from injection molded plastic material, comprising
- a base element (2) and a front plate (3) integrally connected therewith
- at least one light impermeable, in particular front side layer (4) on the front plate (3),
- at least one pin channel (5) that is arranged in the base element (2) and open on a back side (2b) of the base element (2)
- at least one light conductor pin (6) made from light permeable plastic material that is arranged in the pin channel (5),
**characterized in that**
- the light conductor pin (6) is melted together with the front plate (3) in its forward end portion and the light conductor pin (6) is neither melted together nor glued together with the walls of the pin channel (5) of the base element (2).

14. The cover (1) according to claim 13,
**characterized in that**
- the base element (2) is made from light impermeable material in particular a black or a white material,
- the front plate (3) is made from transparent material and the light impermeable front layer (4) is a coating on the transparent front side of the front plate (3),
- the front plate (3) is made from a nontransparent plastic material and the light conductor pin (6) penetrates the front plate (3).

15. The cover according to claim 13 or 14,
**characterized in that**
the light conductor pins (6) and/or the pin channels (5, 5') have a non-circular, in particular rectangular cross section that is filled in particular by the light conductor pins (6) in at least one of the transversal directions, in particular filled completely.

16. The cover according to one of the claims 13 - 15,
**characterized in that**
the light conductor pins (6) and/or the pin channels (5) taper from the rear opening forward, in particular taper conically.

17. The cover according to one of claims 13 - 16,
**characterized in that**
the pin channel (5) is closed on a front side (2a) of the base element (2) by the front plate (3) of the cover (1).

## Revendications

1. Procédé de fabrication d'un couvercle (1) en matière plastique moulée comprenant
- un corps de base (2) et une plaque frontale (3) reliée d'une seule pièce à ce dernier,
- au moins un canal de tige (5) ouvert sur la face arrière (2b) du corps de base (2), dans le corps de base (2),
- au moins une tige de conducteur optique (6) en matière plastique translucide laquelle se trouve dans le canal de tige (5),
dans le fait qu'au moyen d'un outil d'injection (100) successivement
a) le corps de base (2) est moulé dans l'outil (100) et reste dans l'outil (100)
b) à l'écart du corps de base (2) toutes les tiges de conducteur optique (6) nécessaires sont moulées dans le même outil (100),
c) après l'ouverture de l'outil (100), les en particulier toutes les tiges de conducteur optique (6) sont extraites du reste de l'outil ensemble axialement au moyen d'une partie d'outil (103) entourant les tiges de conducteur optique (6),
d) la partie d'outil (103) est déplacée avec les tiges de conducteur optique (6), de sorte que les tiges de conducteur optique (6) se trouvent en position alignée avec les canaux de tige (5) et leur face ouverte du corps de base (2) dans l'outil (100) et
e) l'outil (100) est fermé et les tiges de conducteur optique (6) sont introduites au moyen d'un coulisseau d'outil (104) mobile axialement dans les canaux de tige (5) du corps de base (2),
f) la plaque de base (3) est moulée directement sur le corps de base (2) avant et après l'introduction des tiges de conducteur optique (6) dans le même outil (100) et
g) après l'ouverture de l'outil (100), le couvercle (1) doté des tiges de conducteur optique (6) est retiré.

2. Procédé selon la revendication 1
**caractérisé en ce**
- **qu'**une moitié de de l'outil (100) en particulier l'outil d'éjection (101) est rotatif autour de la direction axiale (100') et
- le corps de base (2), la plaque frontale (3) et les tiges de conducteur optique (6) sont moulés dans différentes sections (100 a, b, c) du même outil (100) en particulier de la moitié non rotative de l'outil (100).

3. Procédé selon l'une des revendications précédentes,
**caractérisé en ce**
- **qu'**après le moulage du corps de base (2) et éventuellement de la plaque frontale (3), ils restent dans l'une des moitiés d'outil, en particulier l'outil d'éjection (101) et les tiges de conducteur optique (6) restent tout d'abord dans l'autre moitié d'outil, en particulier l'outil à buse (102), et
- le coulisseau d'outil (104) est disposé dans la moitié d'outil dans laquelle restent les tiges de conducteur optique (6) après la fabrication, en particulier dans l'outil à buse (102).

4. Procédé selon l'une des revendications précédentes,
**caractérisé en ce**
- **que** les tiges de conducteur optique (6) restent après le moulage dans la moitié de l'outil dans laquelle sont également restés le corps de base (2) et la plaque frontale (3),
- les tiges de conducteur optique (6) sont fabriquées dans cette moitié d'outil avec sa surface frontale dans ces surfaces frontales avant dirigées vers l'intérieur de cette moitié d'outil,
- le coulisseau d'outil (104) est disposé de préférence dans l'autre moitié d'outil, et
- la partie d'outil (103), en particulier la plaque d'indexation (103), est disposée dans la même moitié d'outil.

5. Procédé selon l'une des revendications précédentes,
**caractérisé en ce**
**que** l'outil d'injection (100) comprend entre les deux moitiés d'outil une plaque de rotation qui est pivotante sur 180° autour d'un axe transversalement à la direction axiale (100') et les tiges de conducteur optique (6) restent après l'injection dans la plaque de rotation et sont amenées par basculement de la plaque de rotation dans la position alignée aux canaux de tige (5) sur leur face ouverte.

6. Procédé selon l'une des revendications précédentes,
**caractérisé en ce**
**que** la partie d'outil (103) est une plaque d'indexation (103) qui est tournée autour de son axe axial, en particulier de son axe médian (103') en particulier de 180°.

7. Procédé selon l'une des revendications précédentes,
**caractérisé en ce**
**que** le coulisseau d'outil est déplacé mécaniquement, hydrauliquement ou pneumatiquement, axialement par rapport à l'outil (100) qui le porte.

8. Procédé selon l'une des revendications précédentes,
**caractérisé en ce que**
les tiges de conducteur (6) sont pressées dans les canaux (5, 5') par encliquetage mécanique et/ou adhérence des formes.

9. Procédé selon l'une des revendications précédentes,
**caractérisé en ce que**
les tiges de conducteur optique (6) sont introduites dans les canaux de passage (5') du corps de base (2) suffisamment loin pour faire saillie sur sa surface avant.

10. Procédé selon l'une des revendications précédentes,
**caractérisé en ce que** lors de l'injection de la plaque frontale, les tiges de conducteur optique (6) déjà introduites dans le corps de base (2) sont maintenues en position sur leur face arrière par le coulisseau d'outil (104).

11. Outil de moulage par injection (100) pour un procédé selon l'une des revendications 1 à 10, avec deux moitiés d'outil, en particulier un outil d'éjection (101) et un outil à buse (102), qui sont pressées lors de l'injection l'une contre l'autre par leurs surfaces de contact,
- les deux moitiés d'outil présentant plusieurs sections (100 a, b, c), avec au moins chacun une cavité d'injection,
- une moitié d'outil, en particulier l'outil d'éjection (101), étant commandée en rotation autour de la direction axiale (100') d'une section à la suivante (100 a, b, c),
**caractérisé en ce que**
- dans l'outil (100), en particulier dans la moitié d'outil non rotative, en particulier dans l'outil à buse (102, en particulier seulement dans une section, il se trouve une partie d'outil (103) qui peut être sortie axialement de la surface de contact de cet outil (100) et peut pivoter à l'état sorti,
- soit autour de la direction axiale (100'), en particulier de 180°,
- soit peut être déplacée transversalement à la direction axiale (100'), de préférence dans une moitié d'outil, en particulier dans la moitié non rotative, en particulier dans l'outil à buse (102), dans une section, un coulisseau d'outil (104) étant prévu qui peut coulisser dans la direction axiale (100') et qui est disposé dans l'outil aligné avec la partie d'outil déplacée (103),
- ou peut pivoter autour d'un axe transversal à la direction axiale (100'), en particulier de 180°.

12. Outil de moulage par injection (100) selon la revendication 11,
**caractérisé en ce**
**qu'**au moins dans une des moitiés d'outils, est disposée une unité d'enlèvement de copeaux, en particulier une unité de fraisage, une unité de tour ou de perçage, une unité laser et/ou une unité d'assemblage, qui peut être déplacée en particulier entre une position activée et désactivée par rapport à la moitié d'outil la portant.

13. Couvercle (1) en matière plastique moulé avec
- un corps de base (2) et une plaque frontale (3) reliée d'une seule pièce
- au moins une couche opaque (4) sur la face avant de la plaque frontale (3),
- au moins un canal de tige (5) ouvert sur la face arrière (2b) du corps de base (2), dans le corps de base
- au moins une tige de conducteur optique (6) en matière plastique translucide qui se trouve dans le canal de tige (5),
**caractérisé en ce**
**que** la tige de conducteur optique (6) est fondue à la plaque frontale (3) dans sa zone d'extrémité avant et la tige de conducteur optique (6) est soit collée soit fondue aux parois du canal de tige (5) du corps de base (2).

14. Couvercle selon la revendication 13,
**caractérisé en ce**
- **que** le corps de base (2) se compose de matériau opaque, en particulier un matériau blanc ou noir et/ou
- **que** la plaque frontale (3) se compose d'un matériau transparent et la couche (4) frontale opaque est un revêtement sur la face avant transparente de la plaque frontale (3),
- **que** la plaque frontale (3) se compose de matière plastique opaque et la tige de conducteur optique (6) traverse la plaque frontale (3).

15. Couvercle selon la revendication 13 ou 14,
**caractérisé en ce que**
les tiges de conducteur optique (6) et/ou les canaux de tige (5, 5') possèdent une section transversale non ronde, en particulier rectangulaire, qui est remplie par les tiges de conducteur optique (6) dans au moins une des directions transversales, en particulier entièrement.

16. Couvercle selon l'une des revendications 13 à 15,
**caractérisé en ce**
**que** les tiges de conducteur optique (6) et/ou les canaux de tige (5) se terminent en pointe de l'ouverture arrière vers l'avant, en particulier coniquement.

17. Couvercle selon l'une des revendications 13 à 16,
**caractérisé en ce**
**que** le canal de tige (5) est fermé sur la face avant (2a) du corps de base (2) par la plaque frontale (3) du couvercle (1).
